(19) Europäisches Patentamt
European Patent Office
Office européen des brevets

(11) EP 4 209 360 B1

(12) EUROPEAN PATENT SPECIFICATION

(45) Date of publication and mention of the grant of the patent:
**24.12.2025 Bulletin 2025/52**

(21) Application number: **21864211.4**

(22) Date of filing: **25.08.2021**

(51) International Patent Classification (IPC):
***B60C 3/04*** *(2006.01)* ***B60C 1/00*** *(2006.01)*
***C08K 3/36*** *(2006.01)* ***C08L 9/00*** *(2006.01)*
***C08L 9/06*** *(2006.01)* ***C08L 57/00*** *(2006.01)*
***C08K 5/548*** *(2006.01)*

(52) Cooperative Patent Classification (CPC):
(C-Sets available)
**C08K 3/36; B60C 1/00; B60C 1/0016; B60C 3/04; C08K 5/548; C08L 9/06;** C08K 2201/006; Y02T 10/86 (Cont.)

(86) International application number:
**PCT/JP2021/031235**

(87) International publication number:
**WO 2022/050153 (10.03.2022 Gazette 2022/10)**

# (54) PNEUMATIC TIRE

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2020 JP 2020149002**

(43) Date of publication of application:
**12.07.2023 Bulletin 2023/28**

(73) Proprietor: **Sumitomo Rubber Industries, Ltd.**
**Kobe-shi, Hyogo 651-0072 (JP)**

(72) Inventor: **YOSHIYASU, Hayato**
**Kobe-shi, Hyogo 651-0072 (JP)**

(74) Representative: **TBK**
**Bavariaring 4-6**
**80336 München (DE)**

(56) References cited:
**WO-A1-2020/022326**
**JP-A- 2017 206 194**
**JP-A- 2018 095 733**
**JP-A- 2019 031 619**
**JP-A- 2019 131 647**
**JP-A- 2019 137 281**
**JP-A- 2019 196 436**
**JP-A- 2019 203 112**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 209 360 B1

(52) Cooperative Patent Classification (CPC): (Cont.)

C-Sets
**C08L 9/06, C08L 7/00, C08L 9/00, C08L 57/02, C08L 91/00, C08L 91/08, C08K 3/36, C08K 3/04, C08K 5/548, C08K 3/22, C08K 5/09, C08K 5/18, C08K 3/06, C08K 5/47, C08K 5/31**

## Description

[TECHNICAL FIELD]

The present disclosure relates to a pneumatic tire.

[BACKGROUND ART]

In recent years, from the viewpoint of increasing interest in environmental issues and economic efficiency, there has been a growing demand for fuel efficiency in automobiles, and, regarding pneumatic tires (hereinafter, simply referred to as "tires") installed in automobiles, improvement of fuel efficiency is required.

Conventionally, as a specific means for improving the fuel efficiency of a tire, it was common to form a tread portion using a compound for tires containing a modified synthetic rubber in which a terminal-modified polymer is applied to synthetic rubber, and number of terminals is increased by reducing polymer molecular weight in order to improve the modification effect.

However, in such a tire compounding, the molecular weight of the polymer contained in the compound is low, so that the fracture strength and wear resistance of the product tire may decrease.

Therefore, it has been proposed to improve the fracture strength and wear resistance while maintaining the fuel efficiency (low rolling resistance) by adding isoprene rubber, which has excellent fracture strength, to the modified synthetic rubber described above to form a tread portion (for example, Patent Documents 1 to 4).

[PRIOR ART DOCUMENTS]

[PATENT DOCUMENTS]

[Patent Document 1] JP 2014-213836 A
[Patent Document 2] JP 2017-52329 A
[Patent Document 3] JP 2018-154181 A
[Patent Document 4] JP 2019-85445 A

[SUMMARY OF INVENTION]

[PROBLEM TO BE SOLVED BY THE INVENTION]

However, tires based on these conventional technologies have a reduced grip on the road surface, which may cause deterioration in steering stability, especially when running on wet roads at high speeds, and further improvements are required.

Accordingly, an object of the present disclosure is to provide a pneumatic tire that ensures sufficient steering stability even when running on wet roads at high speed.

[MEANS FOR SOLVING THE PROBLEM]

The present discloser has diligently studied the solution to the above-mentioned problem, found that the above-mentioned problem can be solved by the disclosure described below, and has completed the present disclosure.

This disclosure is a pneumatic tire, in which

the tread portion is formed of a rubber composition containing styrene-butadiene rubber and isoprene-based rubber as rubber components and a resin component,
the content Q (parts by mass) of the resin component is more than 30 parts by mass with respect to 100 parts by mass of the rubber component, and
the following (formula 1) and (formula 2) are satisfied:

$$1600 \leqq (Dt^2 \times \pi/4)/Wt \leqq 2827.4 \cdots (\text{formula 1})$$

$$Q/Wt > 0.1 \quad \cdots\cdots\cdots\cdots\cdots \quad \text{(formula 2)},$$

where the content of the resin component with respect to 100 parts by mass of the rubber component is Q (parts by mass), and the cross-sectional width of the tire is Wt (mm) and the outer diameter of the tire is Dt (mm) when the tire is installed on a standardized rim and the internal pressure is 250 kPa.

[EFFECT OF THE INVENTION]

According to the present disclosure, it is possible to provide a pneumatic tire which ensures sufficient steering stability even when running on a wet road surface at high speed.

[EMBODIMENTS FOR CARRYING OUT THE INVENTION]

Hereinafter, the present disclosure will be specifically described based on the embodiments.

[1] Features of the tires disclosed in this disclosure

First, the characteristics of the tire according to the present disclosure will be described.

The present discloser has considered that the conventional technology of controlling the physical properties of the rubber by compounding is insufficient in order to provide a pneumatic tire which ensures sufficient steering stability even when running on wet roads at high speed, and that it is necessary to study the shape of the tire in addition to the physical properties of the rubber composition forming the tread portion (hereinafter also referred to as "tread rubber composition"). As a result of various experiments and studies, the present discloser has completed this disclosure.

First, in the tire according to the present disclosure, the shape of the tire is such that the area of the tire when viewed from the lateral direction is large with respect to the cross-sectional width of the tire within a predetermined range. This reduces the repetition of deformation per unit time, and as a result, the time that can be used for heat exchange is increased, thereby improving the heat release property of the side portion, and sufficient fuel efficiency can be exhibited.

Specifically, if the tire has a shape that satisfies $1600 \leqq (Dt^2 \times n/4)/Wt \leqq 2827.4$, where the cross-sectional width of the tire is Wt (mm) and the outer diameter is Dt (mm) when the tire is installed on a standardized rim and the internal pressure is 250 kPa, the area ($mm^2$) of the tire when viewed from the lateral direction, that is, $[(Dt/2)^2 \times \pi) = (Dt^2 \times \pi/4)]$, with respect to the cross-sectional width Wt (mm) of the tire is properly ensured, and the heat release property of the side portions is improved, so that rolling resistance is sufficiently reduced and fuel efficiency can be realized. The $(Dt^2 \times n/4)/Wt$ is more preferably 1700 or more, further preferably 1865 or more, further preferably 1963.4 or more, further preferably 1979 or more, further preferably 1981 or more, further preferably 2018 or more, and further preferably 2480 or more.

In the above description, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". In the case of tires that are not specified in the standard, it refers a rim that can be assembled and can maintain internal pressure, that is, the rim that does not cause air leakage from between the rim and the tire, and has the smallest rim diameter, and then the narrowest rim width.

Further, the outer diameter Dt of the tire is the outer diameter of the tire installed on a standardized rim, having an internal pressure of 250 kPa and in a no-load state. The cross-sectional width Wt (mm) of the tire is the width of tire installed on a standardized rim, having an internal pressure of 250 kPa and in a no-load state, and is the distance excluding patterns, letters, and the like on the tire side from the linear distance between the sidewalls (total width of the tire) including all the patterns, letters and the like on the tire side.

However, when a tire having the shape described above is manufactured, the centrifugal force during rolling increases, and the radius of the tire increases during rolling. As a result, it is considered that there is a possibility that uneven ground contact pressure occurs and the steering stability deteriorates when running on a wet road surface at high speed. Particularly, it is considered that the wider the cross-sectional width Wt of the tire, the greater the difference between the contact pressure at the tread center portion and the contact pressure at the tread shoulder portions, and this tends to cause deterioration of steering stability.

In order to solve this problem, the present discloser came up with an idea of using a rubber composition containing isoprene-based rubber, which has excellent breaking strength, as a rubber component and containing a larger amount of a resin component. That is, when the amount of the resin component is increased in accordance with the width of the cross-sectional width Wt, the resin component can be sufficiently distributed even to the surface of the tread shoulder portion where the ground contact pressure tends to be low, and, even at high-speed running, the adhesiveness of the resin

component ensures a good grip on the road surface, thereby improving the steering stability.

Specifically, when the content of the resin component with respect to 100 parts by mass of the rubber component is Q (parts by mass), and when Q is more than 1, that is, the content of the resin component exceeds 1/4, and the ratio(Q/Wt) of the Q (mass part) to the cross-sectional width Wt (mm) exceeds 0.1, it is possible to provide a pneumatic tire with sufficiently improved steering stability.

In addition, from the viewpoint of ensuring sufficient grip on the road surface due to the adhesiveness of the resin component, Q (parts by mass) is more than 30 parts by mass, preferably 40 parts by mass or more, preferably more than 40 parts by mass, and further preferably 50 parts by mass or more. In addition, (Q/Wt) is preferably 0.12 or more, more preferably 0.15 or more, further preferably more than 0.15, further preferably 0.17 or more, further preferably 0.20 or more, further preferably more than 0.20, further preferably 0.24 or more, and further preferably 0.26 or more. On the other hand, it is preferably less than 0.35.

[2] More preferable embodiment of the tire according to the present disclosure.

The tire according to the present disclosure can obtain a larger effect by taking the following embodiment.

1. Aspect ratio

The tire according to the present disclosure is preferably a tire having an aspect ratio of 40% or more, whereby the height of the side portion of the tire is increased, local deformation of the tire can be suppressed and the durability of the tire can be further enhanced.

The aspect ratio (%) described above can be obtained by the following formula using the cross-sectional height Ht (mm) (the distance from the bottom surface of the bead portion to the outermost surface of the tread, i.e. 1/2 of the difference between the outer diameter of the tire and the nominal rim diameter) and the cross-sectional width Wt (mm) of the tire, when the internal pressure is 250 kPa.

$$(\mathrm{Ht}/\mathrm{Wt}) \times 100\ (\%)$$

The aspect ratio is more preferably 45% or more, further preferably 47.5% or more, further preferably 50% or more, further preferably 52.5% or more, further preferably 55% or more, further preferably 58% or more, and further preferably 70% or more. There is no particular upper limit, but for example, it is 100% or less.

5. Tire shape

In the tire according to the present disclosure, when the tire is installed on a standardized rim and the internal pressure is 250 kPa, the specific outer diameter Dt (mm) is preferably, for example, 515 mm or more, more preferably 558 mm or more, further preferably 585 mm or more, particularly preferably 658 mm or more, and most preferably 673 mm or more. On the other hand, it is preferably less than 843 mm, more preferably 802 mm or less, further preferably less than 725 mm, further preferably 719 mm or less, further preferably less than 707 mm, further preferably 700 mm or less, and particularly preferably less than 685 mm.

The specific cross-sectional width Wt (mm) is, for example, preferably 115 mm or more, more preferably 130 mm or more, further preferably 150 mm or more, further preferably 155 mm or more, further preferably 170 mm or more, particularly preferably 185 mm, and most preferably 193 mm or more. On the other hand, it is preferably less than 305 mm, more preferably 255 mm or less, further preferably less than 245 mm, further preferably less than 210 mm, further preferably 205 mm or less, particularly preferably less than 205 mm, and most preferably less than 200 mm.

The specific cross-sectional height Ht (mm) is, for example, preferably 37 mm or more, more preferably 87 mm or more, and further preferably 95 mm or more. On the other hand, it is preferably less than 180 mm, more preferably 147 mm or less, further preferably 144 mm or less, further preferably less than 112 mm, further preferably 109 mm or less, and further preferably less than 101 mm.

In the present disclosure, considering the stability of ride comfort during running, (Dt-2×Ht) is preferably 430 (mm) or more, more preferably 432 (mm) or more, further preferably 450 (mm) or more, further preferably 470 (mm) or more, further preferably 480 (mm) or more, and further preferably 483 (mm) or more. On the other hand, considering the deformation of the tread portion, it is preferably less than 560 (mm), more preferably less than 530 (mm), further preferably less than 510 (mm), and further preferably 508 (mm) or less.

Further, the virtual volume V ($mm^3$) of the tire, the space occupied by the tire when the tire is installed on a standardized rim, and the internal pressure is 250 kPa, can be calculated by the following formula:

$$V = [(Dt/2)^2 - \{(Dt/2) - Ht\}^2] \times \pi \times Wt$$

based on the cross-sectional width of tire Wt (mm), the outer diameter of tire Dt (mm), and the tire cross-sectional height Ht (mm).

The specific virtual volume V is preferably 13,000,000 $mm^3$ or more, more preferably 29,000,000 $mm^3$ or more, further preferably 31,230,020 $mm^3$ or more, and further preferably 36,000,000 $mm^3$ or more. On the other hand, it is preferably less than 88,000,000 $mm^3$, more preferably 77,134,503 $mm^3$ or less, further preferably less than 66,000,000 $mm^3$, further preferably 53,167,961 $mm^3$ or less, further preferably less than 44,000,000 $mm^3$, and particularly preferably less than 38,800,000 $mm^3$.

Further, in the present disclosure, it is preferable that the virtual volume V ($mm^3$) and cross-sectional width Wt (mm) of the tire satisfy $[(V+1.5\times10^7)/Wt] \leqq 4.02\times10^5$. $[(V+1.5\times10^7)/Wt]$ is more preferably $3.62\times10^5$ or less, further preferably $3.33\times10^5$ or less, and further preferably $2.99\times10^5$ or less.

In this way, by decreasing the virtual volume V of the tire according to the decrease in the cross-sectional width Wt of the tire and by decreasing the volume of the tire itself, it is possible to reduce the outer diameter growth rate due to the centrifugal force. As a result, it is considered that the amount of deformation in the bead portion can be reduced, and the rounding of the tread portion can also be suppressed.

It is more preferable that $[(V+2.0\times10^7)/Wt] \leqq 4.02\times10^5$ and further preferable that $[(V+2.5\times10^7)/Wt] \leqq 4.02\times10^5$.

In addition, $[(V+2.0\times10^7)/Wt]$ is preferably $3.81\times10^5$ or less, more preferably $3.57\times10^5$ or less, and further preferably $3.31\times10^5$ or less. And $[(V+2.5\times10^7)/Wt]$ is preferably $4.01\times10^5$ or less, more preferably $3.82\times10^5$ or less, and further preferably $3.63\times10^5$ or less.

[3] Embodiment of the present disclosure

Hereinafter, the present disclosure will be specifically described based on embodiments.

1. Tread rubber composition

In the present embodiment, the tread rubber composition can be obtained from the rubber component, resin component, and other compounding materials described below.

(1) Rubber component

In the present embodiment, as described above, the tread rubber composition contains SBR and isoprene rubber as rubber components. The content of SBR and isoprene-based rubber in 100 parts by mass of the rubber component is preferably 60 parts by mass or more as a whole. Among them, the content of SBR is preferably more than 50 parts by mass and 80 parts by mass or less.

(a) Styrene butadiene rubber (SBR)

As the styrene-butadiene rubber, SBR having a weight average molecular weight of, for example, 100,000 or more and 2 million or less is preferably used. As a result, the strength against strain and stress of the SBR phase can be improved, so that the fracture strength of the tire can be further improved.

The styrene content (hereinafter, also referred to as "styrene amount") in the SBR used in the present embodiment is preferably 5% by mass or more and 25% by mass or less. The styrene content in the rubber composition is preferably 1% by mass or more and 5% by mass or less. As a result, the aggregation of styrenes in the rubber composition can be suppressed, so that the followability of the tread can be improved. The amount of vinyl bond (1,2-bonded butadiene unit amount) in the butadiene portion of SBR is preferably 40% by mass or less. Then, the structure identification of SBR (measurement of the amount of styrene and the amount of vinyl bond) can be performed using, for example, an apparatus of the JNM-ECA series manufactured by JEOL Ltd.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR, but when the modified S-SBR is used, the dispersibility is improved, and further improvement in wear resistance and slip resistance is expected. Therefore, it is preferable.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain terminal modified SBR having the above functional group to the main chain and having at least one end modified with the above modifying agent, and
end-modified SBR which is modified (coupled) with a polyfunctional compound having two or more epoxy groups in the molecule, and into which an epoxy group or hydroxyl group has been introduced,

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.
Further, as the modified SBR, for example, an SBR modified with a compound (modifying agent) represented by the following formula can be used.

[Chemical 1]

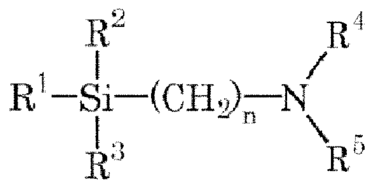

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.
As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.
As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).
Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.
Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., JSR Corporation, Asahi Kasei Co., Ltd., Zeon Co., Ltd., Versalis Co., Ltd., etc. can be used. The SBR may be used alone or in combination of two or more. When two or more types of SBR are used in combination, the weight average of each SBR is used for the above-mentioned styrene amount, vinyl bond amount and the like.

(b) Isoprene-based rubber

Examples of the isoprene-based rubber include natural rubber (N R), isoprene rubber (IR), reformed NR, modified NR, and modified IR. Among them, NR is preferably used.

As the specific NR, for example, SIR20, RSS # 3, TSR20 and the like, which are commonly used in the tire industry, can be used. The IR is not particularly limited, and for example, IR 2200 or the like, whi ch is commonly used in the tire industry, can be used. Reformed NR in cludes deproteinized natural rubber (DPNR), high-purity natural rubber ( UPNR), etc., and modified NR includes epoxidized natural rubber (ENR), hydrogenated natural rubber (HNR), grafted natural rubber, etc. Examp les of the modified IR include epoxidized isoprene rubber, hydrogenated i soprene rubber, and grafted isoprene rubber. These may be used alone or in combination of two or more.

(c) Butadiene rubber

The tread rubber composition may further contain butadiene rubber (BR) as a rubber component, and when BR is contained, the content of BR in 100 parts by mass of the rubber component is, for example, 40 parts by mass or less. The weight average molecular weight of BR is, for example, 100,000 or more and 2 million or less. The vinyl bond amount of BR is, for example, 1% by mass or more and 30% by mass or less. The cis content of BR is, for example, 1% by mass or more and 98% by mass or less. The trans content of BR is, for example, 1% by mass or more and 60% by mass or less.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.

As the BR, for example, products of Ube Industries, Ltd., JSR Corporation, Asahi Kasei Co., Ltd., and Nippon Zeon Co., Ltd., etc. can be used.

(d) Other rubber components

Further, as another rubber component, rubber (polymer) generally used in the production of tires such as nitrile rubber (NBR) may be contained, if required.

(2) Compounding materials other than rubber components

(a) Resin component

In the present embodiment, the tread rubber composition contains a resin component from the viewpoint of imparting tackiness. As described above, the content is more than 30 parts by mass with respect to 100 parts by mass of the rubber component, and (Q/Wt), the ratio of Q (parts by mass) to the cross-sectional width Wt (mm), is an amount exceeding 0.1 (parts by mass). The Q (parts by mass) is over 30 parts by mass, and preferably more than 40 parts by mass. In addition, as described above, (Q/Wt) is preferably 0.12 or more, more preferably 0.15 or more, further preferably more than 0.15, further preferably 0.17 or more, further preferably 0.20 or more, further preferably more than 0.20, further preferably 0.24 or more, and further preferably 0.26 or more. On the other hand, it is preferably less than 0.35. In addition, since these resin components are thermoplastic, they also function as a softening agent together with the oil described later.

The resin component may be solid or liquid at room temperature. Specific examples of the resin components include rosin-based resin, styrene-based resin, coumarone-based resin, terpene-based resin, C5 resin, C9 resin, C5C9 resin, and acrylic resins. Two or more of them may be used in combination.

The rosin-based resin is a resin whose main component is rosin acid obtained by processing rosin. The rosin-based resins (rosins) can be classified according to the presence or absence of modification, and can be classified into unmodified rosin (non-modified rosin) and modified rosin (rosin derivative). Unmodified rosins include, for example, tall rosin (also known as tall oil rosin), gum rosin, wood rosin, disproportionated rosin, polymerized rosin, hydrogenated rosin, and other chemically modified rosins. The modified rosin is a modified unmodified rosin, and examples thereof include rosin esters, unsaturated carboxylic acid-modified rosins, unsaturated carboxylic acid-modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and $\alpha$, $\beta$-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, $\alpha$-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group -containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

As commercially available terpene-based resins, for example, products of Yasuhara Chemical Co., Ltd., etc. can be used. They may be used alone or in combination of two or more.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.

The "C9 resin" refers to a resin obtained by polymerizing a C9 fraction, which may be hydrogenated or modified. Examples of the C9 fraction include petroleum fractions having 8 to 10 carbon atoms such as vinyltoluene, alkylstyrene, indene, and methyl indene. As specific examples thereof, for example, a coumaron indene resin, a coumaron resin, an indene resin, and an aromatic vinyl resin are preferably used. As the aromatic vinyl resin, a homopolymer of α-methylstyrene or styrene or a copolymer of α-methylstyrene and styrene is preferable because it is economical, easy to process, and excellent in heat generation. A copolymer of α-methylstyrene and styrene is more preferred. As the aromatic vinyl-based resin, for example, those commercially available from Clayton, Eastman Chemical, etc. can be used.

The "C5-C9 resin" refers to a resin obtained by copolymerizing the C5 fraction and the C9 fraction, which may be hydrogenated or modified. Examples of the C5 fraction and the C9 fraction include the above-mentioned petroleum fraction. As the C5-C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., JX Energy Co., Ltd., Arakawa Chemical Industry Co., Ltd., Taoka Chemical Industry Co., Ltd. can be used.

(b) Filler

In the present embodiment, the rubber composition preferably contains a filler. Specific examples of fillers include carbon black, silica, calcium carbonate, talc, alumina, clay, aluminum hydroxide, and mica. Among these, silica is

preferably used as a reinforcing agent from the view point of exerting low rolling resistance, and it is preferable to use the silica together with a silane coupling agent. It is also preferable to use carbon black as a reinforcing agent, if necessary.

(b-1) Silica

The content of the rubber component with respect to 100 parts by mass is preferably 40 parts by mass or more. The upper limit is not particularly limited as long as the rubber composition can be kneaded, but is preferably about 200 parts by mass, for example. As a result, silica is dispersed throughout the rubber system without being unevenly distributed in either NR or SBR, so that wear resistance and slip resistance can be further improved.

As the silica, silica having a BET specific surface area of 180 $m^2/g$ or more and 300 $m^2/g$ or less can be preferably used. As a result, the reinforcing property of silica can be further enhanced, so that particularly the wear resistance is improved. The BET specific surface area is the value of the nitrogen adsorption specific surface area ($N_2SA$) measured by the BET method according to ASTM D3037-93.

Specific examples of silica include dry silica (anhydrous silica) and wet silica (hydrous silica). Of these, wet silica is preferable because it has a large number of silanol groups, and products of Evonik, Degussa, Rhodia, Tosoh Silica Co., Ltd., Solbay Japan Co., Ltd., and Tokuyama Co., Ltd., etc. can be used.

(b-2) Silane coupling agent

The rubber composition preferably contains a silane coupling agent together with silica. The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl) disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

The preferable content of the silane coupling agent is, for example, more than 3 parts by mass and less than 15 parts by mass with respect to 100 parts by mass of silica. As a specific silane coupling agent, for example, products of Degussa, Momentive, Shinetsu Silicone Co., Ltd., Tokyo Chemical Industry Co., Ltd., Azumax Co., Ltd., Toray Dow Corning Co., Ltd., etc. can be used.

(b-3) Carbon black

The tread rubber composition preferably contains carbon black. The content of carbon black is, for example, 1 part by mass or more and 200 parts by mass or less with respect to 100 parts by mass of the rubber component.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; and channel black (channel carbon black) such as EPC, MPC and CC. These may be used alone or in combination of two or more.

Nitrogen adsorption specific surface area ($N_2SA$) of carbon black is, for example, 30 $m^2/g$ or more and 250 $m^2/g$ or less. The amount of dibutyl phthalate (DBP) absorbed by carbon black is, for example, 50 ml/100 g or more and 250 ml/100 g or less. The nitrogen adsorption specific surface area of carbon black is measured according to ASTM D4820-93, and the amount of DBP absorbed is measured according to ASTM D2414-93.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation,

Shin Nikka Carbon Co., Ltd., Columbia Carbon Co., Ltd., etc. These may be used alone or in combination of two or more.

(b-4) Other fillers

The rubber composition may further contain fillers such as calcium carbonate, talc, alumina, clay, aluminum hydroxide, and mica, which are generally used in the tire industry, in addition to the above-mentioned carbon black and silica. These contents are, for example, more than 0.1 part by mass and less than 200 parts by mass with respect to 100 parts by mass of the rubber component.

(c)Softener

The tread rubber composition may contain oil (including extender oil), liquid rubber, or the like as a softener. The total content of the softener is preferably more than 1 part by mass and less than 10 parts by mass with respect to 100 parts by mass of the rubber component. The content of oil also includes the amount of oil contained in the rubber (oil-extended rubber).
Examples of the oil include mineral oils (commonly referred to as process oils), vegetable oils, or mixtures thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil. These may be used alone or in combination of two or more.
Specific examples of process oil (mineral oil) include products of Idemitsu Kosan Co., Ltd., Sankyo Yuka Kogyo Co., Ltd., Japan Energy Co., Ltd., Olisoy Co., Ltd., H&R Co., Ltd., Toyokuni Seiyu Co., Ltd., Showa Shell Sekiyu Co., Ltd., and Fuji Kosan Co., Ltd.
The liquid rubber mentioned as the softener is a polymer in a liquid state at room temperature (25°C) and is a polymer having a monomer similar to that of solid rubber as a constituent element. Examples of the liquid rubber include farnesene-based polymers, liquid diene-based polymers, and hydrogenated additives thereof.
The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and ß-farnesene (7,11-dimethyl-3-methylene-1, 6,10-dodecatorien).
The farnesene-based polymer may be a homopolymer of farnesene (farnesene homopolymer) or a copolymer of farnesene and a vinyl monomer (farnesene-vinyl monomer copolymer).
Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).
The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).
The content of the liquid rubber (the total content of the liquid farnesene-based polymer, the liquid diene-based polymer, etc.) is, for example, more than 1 part by mass and less than 100 parts by mass with respect to 100 parts by mass of the rubber component.
As the liquid rubber, for example, products of Kuraray Co., Ltd. and Clay Valley Co., Ltd. can be used.

(d) Anti-aging agent

The tread rubber composition preferably contains an anti-aging agent. Content of the anti-aging agent is, for example, 1 part by mass or more and 10 parts by mass or less with respect to 100 mass parts of rubber components.
Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.
As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(e) Stearic acid

The tread rubber composition may contain stearic acid. Content of stearic acid is, for example, 0.5 parts by mass or more and 10.0 parts by mass or less with respect to 100 parts by mass of the rubber component. As the stearic acid, conventionally known ones can be used, and, for example, products of NOF Corporation, NOF Corporation, Kao Corporation, Fuji film Wako Pure Chemical Industries, Ltd., and Chiba Fatty Acid Co., Ltd., etc. can be used.

(f) Zinc oxide

The tread rubber composition may contain zinc oxide (zinc white). Content of zinc oxide is, for example, 0.5 parts by mass or more and 10 parts by mass or less with respect to 100 parts by mass of the rubber component. As the zinc oxide, conventionally known ones can be used, for example, products of Mitsui Metal Mining Co., Ltd., Toho Zinc Co., Ltd., Hakusui Tech Co., Ltd., Shodo Chemical Industry Co., Ltd., Sakai Chemical Industry Co., Ltd., etc. can be used.

(g) Wax

The tread rubber composition preferably contains wax. Content of the wax is, for example, 0.5 to 20 parts by mass, preferably 1.0 to 15 parts by mass, and more preferably 1.5 to 10 parts by mass with respect to 100 parts by mass of the rubber component.

The wax is not particularly limited, and examples thereof include petroleum waxes such as paraffin wax and microcrystalline wax; natural waxes such as plant waxes and animal waxes; synthetic waxes such as polymers of ethylene and propylene. These may be used alone or in combination of two or more.

As the wax, for example, products of Ouchi Shinko Chemical Industry Co., Ltd., Nippon Seiro Co., Ltd., Seiko Chemical Co., Ltd., etc. can be used.

(h)Crosslinking agent and vulcanization accelerator

The tread rubber composition preferably contains a cross-linking agent such as sulfur. Content of the cross-linking agent is, for example, 0.1 part by mass or more and 10.0 parts by mass or less with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryo Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys, and KA9188 (1,6-bis (N, N'-dibenzylthiocarbamoyldithio) hexane) manufactured by Lanxess; and organic peroxides such as dicumyl peroxide.

The tread rubber composition preferably contains a vulcanization accelerator. Content of the vulcanization accelerator is, for example, 0.3 parts by mass or more and 10.0 parts by mass or less with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N,N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(i) Other

In addition to the above components, the tread rubber composition may further contain additives generally used

in the tire industry, such as fatty acid metal salts, carboxylic acid metal salts, organic peroxides, and graphite. Content of these additives is, for example, more than 0.1 part by mass and less than 200 parts by mass with respect to 100 parts by mass of the rubber component.

2 Production of tread rubber composition

The tread rubber composition is produced by a general method, for example, a manufacturing method including a base kneading step of kneading a rubber component with a filler such as silica or carbon black, and a finish kneading step of kneading the kneaded product obtained in the base kneading step and a cross-linking agent.

The kneading can be performed using a known (sealed) kneader such as a banbury mixer, a kneader, or an open roll.

The kneading temperature of the base kneading step is, for example, higher than 50 °C or higher and 200 °C or lower, and the kneading time is, for example, 30 seconds or more and 30 minutes or less. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as needed.

In the finish kneading step, the kneaded product obtained in the base kneading step and the cross-linking agent are kneaded. The kneading temperature of the finish kneading step is, for example, room temperature or higher and 80 °C or lower, and the kneading time is, for example, 1 minute or more and 15 minutes or less. In the finish kneading step, in addition to the above components, a vulcanization accelerator, zinc oxide and the like may be appropriately added and kneaded as needed.

3. Tire manufacturing

The tire of the present discloser is manufactured by a usual method using an unvulcanized rubber composition obtained through the finish kneading step. That is, the unvulcanized rubber composition is extruded according to the shape of each tire member of the tread, and is molded together with other tire members by a normal method on a tire molding machine to produce an unvulcanized tire.

Specifically, on the molded drum, the inner liner as a member to ensure the airtightness of the tire, the carcass as a member to withstand the load, impact, and filling air pressure received by the tire, a belt as a member to strongly tighten the carcass to increase the rigidity of the tread, and the like are wound, both ends of the carcass are fixed to both side edges, a bead part as a member for fixing the tire to the rim is arranged, and formed into a toroid shape. Then the tread is pasted on the center of the outer circumference, and the sidewall portion as a member that protects the carcass and withstands bending is pasted on the radial outer side to produce an unvulcanized tire.

In the present embodiment, it is preferable to provide with an inclined belt layer that extends at an angle of 55 ° or more and 75 ° or less with respect to the tire circumferential direction, as the belt. As a result, the durability of the tire is ensured while the rigidity of the tread can be sufficiently maintained.

Then, the produced unvulcanized tire is heated and pressed in a vulcanizer to obtain a tire. The vulcanization step can be carried out by applying a known vulcanization means. The vulcanization temperature is, for example, 120 °C or higher and 200 °C or lower, and the vulcanization time is, for example, 5 minutes or more and 15 minutes or less.

At this time, the tire is formed into a shape that satisfies the above-mentioned (formula 1).

Specific tires that can satisfy the above-mentioned (formula 1) include 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, and 195/55R20.

In this embodiment, the tire satisfying the above-mentioned (formula 1) is preferably applied to a pneumatic tire for a passenger car, and by forming the tread portion using the tread rubber composition described above and by satisfying the above formula, it is possible to contribute more preferably to the solution of the problem in the present disclosure, that is, to improve steering stability during running in the rain.

The pneumatic tire for a passenger car mentioned above is a tire installed on a vehicle running on four wheels and has a maximum load capacity of 1000 kg or less. Here, the maximum load capacity is the maximum load capacity determined for each tire by the standard in the standard system including the standard on which the tire is based. For example, in the case of JATMA (Japan Automobile Tire Association), it is the maximum load capacity based on Load index (LI), in the case of TRA (The Tire and Rim Association, Inc.), it is the maximum value described in "TIRE LOAD LIMITS AT VARIOUS COLD INFLATION PRESSURES", and in the case of "ETRTO (The European Tire and Rim Technical Organization)", it is the "INFLATION PRESSURE". For tires not specified in these standards, the value calculated based on the following formula shall be the maximum load capacity.

$$\text{Maximum load capacity (kg)} = 0.000011 \times V + 175$$

V: virtual volume of tire ($mm^3$)

The maximum load capacity is not particularly limited as long as it is 1000 kg or less. However, in general, the tire weight tends to increase as the maximum load capacity increases, and the braking distance also increases due to inertia accordingly. Therefore, the maximum load capacity is preferably 900 kg or less, more preferably 800 kg or less, and further preferably 700 kg or less.

From the viewpoint of the braking distance due to the inertia described above, the tire weight is preferably 20 kg or less, more preferably 15 kg or less, and further preferably 12 kg or less, 10 kg or less, and 8 kg or less. The tire of the present disclosure may be provided with electronic components, and in this case, the tire weight referred to here is the weight of the tire including the weights of the electronic components and the electronic component mounting members. If a sealant, sponge or the like is provided in the lumen, the weight of the tire includes them.

[EXAMPLES]

Hereinafter, the present disclosure will be described in more detail with reference to examples.

1. Manufacture of rubber compositions for treads

First, a rubber composition for tread was produced.

(1) Compounding material

First, each compounding material shown below was prepared.

(a) Rubber component

(a-1) NR: RSS#3
(a-2) SBR: NS116 manufactured by JSR Corporation (Styrene content: 20% by mass)
(a-3) BR: UBEPOL BR150B manufactured by Ube Industries, Ltd.

(b) Compounding materials other than rubber components

(b-1) Carbon black: Show Black N220 manufactured by Cabot Japan Co., Ltd. (N2SA: 111 m2/g, DBP: 115 ml/100 g)
(b-2) Silica: Ultrasil VN3 manufactured by Degussa ($N_2SA$: 175 $m^2/g$)
(b-3) Silane coupling agent: Si69 manufactured by Degussa (Bis 3-triethoxysilylpropyl)tetrasulfide)
(b-4) Process oil: Process X-140 (aroma oil) manufactured by Japan Energy Co., Ltd.
(b-5) Resin component: Sylvatraxx 4401 manufactured by Kraton (Copolymer of $\alpha$-methylstyrene and styrene)
(b-6) Zinc white: 2 types of zinc oxide manufactured by Mitsui Mining & Smelting Co., Ltd.
(b-7) Stearic acid: stearic acid "Tsubaki" manufactured by NOF Corporation
(b-8) Anti-aging agent: Nocrac 6C manufactured by Ouchi Shinko Chemical Industry Co., Ltd. (N-1,3-dimethylbutyl-N'-phenyl-p-phenylenediamine)
(b-9) Wax: Sannok wax manufactured by Ouchi Shinko Chemical Industry Co., Ltd.
(b-10) Cross-linking agent and vulcanization accelerator

Sulfur: powdered sulfur manufactured by Tsurumi Chemical Industry Co., Ltd.
Vulcanization accelerator-1: Nocceler CZ manufactured by Ouchi Shinko Chemical Industry Co., Ltd. (N-cyclohexyl-2-benzothiazolylsulfenamide)
Vulcanization accelerator-2: Nocceler D manufactured by Ouchi Shinko Chemical Industry Co., Ltd. (N, N'-diphenylguanidine)

(2) Manufacture of rubber composition

Table 1 shows the amount (parts by mass) of each compounding material excluding the resin component. The compounding amount (parts by mass) of the resin component was the amount shown in Tables 2 to 4.

[Table 1]

| Compounding material | Compounding amount |
|---|---|
| NR | 20 |
| SBR | 60 |
| BR | 20 |
| Carbon black | 10 |
| Silica | 60 |
| Silane coupling agent | 5 |
| Oil | 3 |
| Zinc white | 2.5 |
| Stearic acid | 2 |
| Anti-aging agent | 1.5 |
| Wax | 1 |
| Sulfur | 1.5 |
| Vulcanization accelerator-1 | 1 |
| Vulcanization accelerator-2 | 1 |

Among the compounding materials shown in Table 1, each compounding material excluding sulfur, vulcanization accelerator-1 and vulcanization accelerator-2, and the resin component were kneaded for 5 minutes at 150°C to obtain a kneaded product.

2. Tire manufacturing

Next, sulfur and a vulcanization accelerator were added to the obtained kneaded product, and the mixture was kneaded at 80°C for 5 minutes using an open roll to obtain a tread rubber composition. A tread is formed using the obtained tread rubber composition, bonded together with other tire members to form an unvulcanized tire, which is then vulcanized for 10 minutes under the condition of 170°C to produce each test tire having the size of 155 type (Table 2), 205 type (Table 3), or 245 type (Table 4).

Then, the cross-sectional width Wt (mm), the outer diameter Dt (mm), the cross-sectional height Ht (mm), and the aspect ratio (%) of each test tire were determined, and the virtual volume V (mm 3 ) was calculated.

Then, (Dt-2×Ht), $(V+1.5\times10^7)$/Wt, $(V+2.0\times10^7)$/Wt, $(V+2.5\times10^7)$/Wt, and Q/Wt were calculated. The results are shown in Tables 2-4.

3. Evaluation of steering stability

(1) Test method

Each test tire is installed on all wheels of a vehicle (domestic FF vehicle, displacement 2000cc). After filling air so that the internal pressure is 250kPa, it is run on a wet test course at 40km/h and 120km/h, and the change in handling performance due to changes in running speed was evaluated sensorily by the driver on a 5-point scale from 1 (feeling a large change) to 5 (feeling almost no change). Then, the total points of the evaluations by the 20 drivers were calculated.

Then, the result of the tire used as the evaluation reference (Comparative Example 1-2 in Table 2, Comparative Example 2-2 in Table 3, and Comparative Example 3-3 in Table 4) was set to 100, and, the calculated results were indexed as wet steering stability index, based on the following formula. The higher the value, the better the steering stability during high-speed running on wet roads.

Wet steering stability index = [(result of test tire)/result of evaluation reference tire)] × 100

(2) Evaluation results

Table 2 shows the evaluation results for the size 155 type, Table 3 shows the evaluation results for the size 205 type, and Table 4 shows the evaluation results for the size 245 type. Examples 1-1, 2-1 and 3-1 are reference examples.

[Table 2]

| | Example No. | | Comparative example No. | |
|---|---|---|---|---|
| | 1-1 | 1-2 | 1-1 | 1-2 |
| SIZE | 155/70R19 | 155/70R19 | 155/70R19 | 155/70R19 |
| Content of Resin component (Q: Part by mass) | 26 | 40 | 10 | 15 |
| Wt (mm) | 155 | 155 | 155 | 155 |
| Dt (mm) | 699.6 | 699.6 | 699.6 | 699.6 |
| Ht(mm) | 109 | 109 | 109 | 109 |
| V ($mm^3$) | 31230020 | 31230020 | 31230020 | 31230020 |
| Aspect ratio (%) | 70 | 70 | 70 | 70 |
| Dt-2×Ht(mm) | 483 | 483 | 483 | 483 |
| ($Dt^2$×π/4)/Wt | 2480 | 2480 | 2480 | 2480 |
| (V+1.5×$10^7$)/Wt | 298258 | 298258 | 298258 | 298258 |
| (V+2.0×$10^7$)/Wt | 330516 | 330516 | 330516 | 330516 |
| (V+2.5×$10^7$)Mt | 362774 | 362774 | 362774 | 362774 |
| Q/Wt | 0.17 | 0.26 | 0.06 | 0.10 |
| Wet steering stability index | 105 | 120 | 85 | 100 |

[Table 3]

| | Example No. | | Comparative example No. | |
|---|---|---|---|---|
| | 2-1 | 2-2 | 2-1 | 2-2 |
| SIZE | 205/70R17 | 205/70R17 | 205/70R17 | 205/70R17 |
| Content of Resin component (Q: Part by mass) | 30 | 50 | 10 | 20 |
| Wt (mm) | 205 | 205 | 205 | 205 |
| Dt (mm) | 718.8 | 718.8 | 718.8 | 718.8 |
| Ht(mm) | 144 | 144 | 144 | 144 |
| V ($mm^3$) | 53167961 | 53167961 | 53167961 | 53167961 |
| Aspect ratio (%) | 70 | 70 | 70 | 70 |
| Dt-2×Ht(mm) | 432 | 432 | 432 | 432 |
| ($Dt^2$×π/4)/Wt | 1979 | 1979 | 1979 | 1979 |
| (V+1.5×$10^7$)/Wt | 332527 | 332527 | 332527 | 332527 |
| (V+2.0×$10^7$)/Wt | 356917 | 356917 | 356917 | 356917 |
| (V+2.5×$10^7$)/Wt | 381307 | 381307 | 381307 | 381307 |
| Q/Wt | 0.15 | 0.24 | 0.05 | 0.10 |
| Wet steering stability index | 110 | 130 | 90 | 100 |

[Table 4]

| | Example No. | | Comparative example No. | | |
|---|---|---|---|---|---|
| | 3-1 | 3-2 | 3-1 | 3-2 | 3-3 |
| SIZE | 245/60R20 | 245/60R20 | 245/60R20 | 245/60R20 | 245/60R20 |
| Content of Resin component (Q: Part by mass) | 30 | 50 | 15 | 25 | 26 |
| Wt (mm) | 255 | 255 | 255 | 255 | 255 |
| Dt (mm) | 802 | 802 | 802 | 802 | 802 |
| Ht(mm) | 147 | 147 | 147 | 147 | 147 |
| V ($mm^3$) | 77134503 | 77134503 | 77134503 | 77134503 | 77134503 |
| Aspect ratio (%) | 58 | 58 | 58 | 58 | 58 |
| Dt-2$\times$Ht(mm) | 508 | 508 | 508 | 508 | 508 |
| ($Dt^2 \times \pi/4$)/Wt | 1981 | 1981 | 1981 | 1981 | 1981 |
| (V+1.5$\times 10^7$)/Wt | 361312 | 361312 | 361312 | 361312 | 361312 |
| (V+2.0$\times 10^7$)/Wt | 380920 | 380920 | 380920 | 380920 | 380920 |
| (V+2.5$\times 10^7$)/Wt | 400527 | 400527 | 400527 | 400527 | 400527 |
| Q/Wt | 0.12 | 0.20 | 0.06 | 0.10 | 0.10 |
| Wet steering stability index | 115 | 135 | 85 | 95 | 100 |

It is shown from Tables 2 to 4 that, in tires of any size, 155 size, 205 size, or 245 size, when the resin component amount Q is 1/4 of the rubber component amount, that is, 25 parts by mass per 100 parts by mass of the rubber component, and the above-mentioned (formula 1) and (formula 2) are satisfied, the wet steering stability index exceeds 100, and a pneumatic tire with sufficiently improved steering stability when running on a wet road surface at high speed can be provided.

Further, it is understood that, by satisfying the requirements specified in the present disclosure (2) and later, the wet steering stability index can be further increased, and a pneumatic tire with further improved steering stability when running on wet roads at high speed can be provided.

On the other hand, when the resin component amount Q is 1/4 or less of the rubber component amount (25 parts by mass or less with respect to 100 parts by mass of the rubber component), or when either (formula 1) or (formula 2) was not satisfied, the wet steering stability index is 100 or less, and it cannot be said that the steering stability is sufficiently improved when running on wet roads at high speed.

## Claims

**1.** A pneumatic tire, in which

the tread portion is formed of a rubber composition containing styrene-butadiene rubber and isoprene-based rubber as rubber components and a resin component,
the content Q (parts by mass) of the resin component is more than 30 parts by mass with respect to 100 parts by mass of the rubber component, and
the following (formula 1) and (formula 2) are satisfied:

$$1600 \leqq Dt^2 \times \pi/4)/Wt \leqq 2827.4 \cdots\cdots \text{(formula 1)}$$

$$Q/Wt > 0.1 \cdots\cdots\cdots\cdots \text{(formula 2)},$$

where the content of the resin component with respect to 100 parts by mass of the rubber component is Q (parts by mass), and the cross-sectional width of the tire is Wt (mm) and the outer diameter of the tire is Dt (mm) when the tire is installed on a standardized rim and the internal pressure is 250 kPa.

2. The pneumatic tire according to claim 1, wherein, when the amount of styrene-butadiene rubber is R1 (parts by mass) and the amount of isoprene-based rubber is R2 (parts by mass), in 100 parts by mass of the rubber component, the following (formula 3) and (formula 4) are satisfied.

$$R1+R2 \geqq 60 \cdots\cdots\cdots \text{(formula 3)}$$

$$50 < R1 \leqq 80 \cdots\cdots\cdots \text{(formula 4)}$$

3. The pneumatic tire according to claim 1 or claim 2, wherein the following formula is satisfied.

$$1865 \leqq (Dt^2 \times \pi/4)/Wt$$

4. The pneumatic tire according to any one of claims 1 to 3, wherein the following (formula 5) is satisfied.

$$Q/Wt > 0.15 \cdots\cdots\cdots \text{(formula 5)}$$

5. The pneumatic tire according to any one of claims 1 to 4, wherein the following (formula 5) is satisfied.

$$Q/Wt < 0.35 \cdots\cdots\cdots \text{(formula 6)}$$

6. The pneumatic tire according to any one of claims 1 to 5, wherein the styrene-butadiene rubber has a weight-average molecular weight of 100,000 or more and 2,000,000 or less.

7. The pneumatic tire according to any one of claims 1 to 6, wherein the styrene-butadiene rubber is a modified solution-polymerized styrene-butadiene rubber.

8. The pneumatic tire according to any one of claims 1 to 7, wherein the styrene content in the styrene-butadiene rubber is 5% by mass or more and 25% by mass or less.

9. The pneumatic tire according to any one of claims 1 to 8, wherein the styrene content in the rubber composition is 1% by mass or more and 5% by mass or less.

10. The pneumatic tire according to any one of claims 1 to 9, wherein the rubber composition further contains 40 parts by mass or less of butadiene rubber in 100 parts by mass of the rubber component.

11. The pneumatic tire according to any one of claims 1 to 10, wherein the resin component is selected from the group consisting of C5-based resins, C5-C9-based resins, C9-based resins, terpene-based resins, terpene-aromatic compound-based resins, rosin-based resins, dicyclopentadiene resins, and alkylphenol-based resins.

12. The pneumatic tire according to any one of claims 1 to 11, wherein the rubber composition contains 40 parts by mass or more of silica with respect to 100 parts by mass of the rubber component.

13. The pneumatic tire according to claim 12, wherein the silica has a BET specific surface area, as measured according to ASTM D3037-93, of 180 m2/g or more and 300 m2/g or less.

14. The pneumatic tire according to claim 12 or claim 13, wherein more than 3 parts by mass and less than 15 parts by mass of a silane coupling agent is contained with respect to 100 parts by mass of the silica.

15. The pneumatic tire according to any one of claims 1 to 14, which has an aspect ratio, determined as defined in the description, of 40% or more.

16. The pneumatic tire according to any one of claims 1 to 15, wherein the outer diameter Dt is less than 685 (mm).

17. The pneumatic tire according to any one of claims 1 to 16, wherein the cross-sectional width Wt(mm) is less than 305

mm.

**18.** The pneumatic tire according to any one of claims 1 to 17, wherein (Dt-2×Ht) is 430 (mm) or more, where the outer diameter of the tire is Dt (mm), determined as defined in the description, and the cross-sectional height of tire is Ht (mm), determined as defined in the description, when the tire is installed on a standardized rim and the internal pressure is 250 kPa.

**19.** The pneumatic tire according to any one of claims 1 to 18, wherein, when the cross-sectional width of the tire is Wt (mm), the outer diameter is Dt (mm), and the cross-sectional height is Ht (mm), when the tire is installed on a standardized rim and the internal pressure is 250 kPa, the virtual volume V (mm3) of the tire, the space occupied by the tire, and the Wt, determined as defined in the description, satisfy the following formula.

$$[(V + 1.5\times10^{7}\ \cancel{20}) / Wt] \leqq 4.02 \times 10^{5}$$

**20.** The pneumatic tire according to claim 19, wherein the following formula is satisfied.

$$[(V + 2.0\times10^{7}) / Wt] \leqq 4.02 \times 10^{5}$$

**21.** The pneumatic tire according to claim 20, wherein the following formula is satisfied.

$$[(V + 2.5\times10^{7}) / Wt] \leqq 4.02 \times 10^{5}$$

**22.** The pneumatic tire according to any one of claims 1 to 21, which is a pneumatic tire for a passenger car.

**Patentansprüche**

**1.** Luftreifen, bei dem

der Laufflächenabschnitt aus einer Kautschukzusammensetzung gebildet ist, die Styrol-Butadien-Kautschuk und Kautschuk auf Isoprenbasis als Kautschukkomponenten und eine Harzkomponente enthält,
der Gehalt Q (Masseteile) der Harzkomponente mehr als 30 Masseteile, bezogen auf 100 Masseteile der Kautschukkomponente, ist, und
die folgende (Formel 1) und (Formel 2) erfüllt sind:

$$1600 \leqq (Dt^{2} \times \pi/4)/Wt \leqq 2827{,}4 \cdot\cdot\cdot\cdot \text{(Formel 1)}$$

$$Q/Wt > 0{,}1 \cdot\cdot\cdot\cdot\cdot\cdot\cdot\cdot\cdot\cdot\cdot\cdot\cdot\cdot\cdot\cdot \text{(Formel 2)},$$

wobei der Gehalt der Harzkomponente, bezogen auf 100 Masseteile der Kautschukkomponente, Q (Masseteile) ist, und die Querschnittsbreite des Reifens Wt (mm) ist und der Außendurchmesser des Reifens Dt (mm) ist, wenn der Reifen auf einer genormten Felge montiert ist und der Innendruck 250 kPa ist.

**2.** Luftreifen nach Anspruch 1, wobei, wenn die Menge an Styrol-Butadien-Kautschuk R1 (Masseteile) ist und die Menge an Kautschuk auf Isoprenbasis R2 (Masseteile) ist, in 100 Masseteilen der Kautschukkomponente, die folgende (Formel 3) und (Formel 4) erfüllt sind.

$$R1+R2 \geqq 60 \cdot\cdot\cdot\cdot\cdot\cdot\cdot\cdot \text{(Formel 3)}$$

$$50 < R1 \leqq 80 \cdot\cdot\cdot\cdot\cdot\cdot\cdot\cdot \text{(Formel 4)}$$

**3.** Luftreifen nach Anspruch 1 oder Anspruch 2, wobei die folgende Formel erfüllt ist.

$$1865 \leqq (Dt^2 \times \pi/4)/Wt$$

4. Luftreifen nach einem der Ansprüche 1 bis 3, wobei die folgende (Formel 5) erfüllt ist.

$$Q/Wt > 0{,}15 \cdots\cdots\cdots \text{(Formel 5)}$$

5. Luftreifen nach einem der Ansprüche 1 bis 4, wobei die folgende (Formel 5) erfüllt ist.

$$Q/Wt < 0{,}35 \cdots\cdots\cdots \text{(Formel 6)}$$

6. Luftreifen nach einem der Ansprüche 1 bis 5, wobei der Styrol-Butadien-Kautschuk ein gewichtsmittleres Molekulargewicht von 100.000 oder mehr und 2.000.000 oder weniger hat.

7. Luftreifen nach einem der Ansprüche 1 bis 6, wobei der Styrol-Butadien-Kautschuk ein modifizierter lösungspolymerisierter Styrol-Butadien-Kautschuk ist.

8. Luftreifen nach einem der Ansprüche 1 bis 7, wobei der Styrolgehalt in dem Styrol-Butadien-Kautschuk 5 Masse-% oder mehr und 25 Masse-% oder weniger ist.

9. Luftreifen nach einem der Ansprüche 1 bis 8, wobei der Styrolgehalt in der Kautschukzusammensetzung 1 Masse-% oder mehr und 5 Masse-% oder weniger ist.

10. Luftreifen nach einem der Ansprüche 1 bis 9, wobei die Kautschukzusammensetzung außerdem 40 Masseteile oder weniger Butadien-Kautschuk in 100 Masseteilen der Kautschukkomponente enthält.

11. Luftreifen nach einem der Ansprüche 1 bis 10, wobei die Harzkomponente ausgewählt ist aus der Gruppe bestehend aus Harzen auf C5-Basis, Harzen auf C5-C9-Basis, Harzen auf C9-Basis, Harzen auf Terpenbasis, Harzen auf Basis von Terpen-aromatischen Verbindungen, Harzen auf Kolophoniumbasis, Dicyclopentadienharzen und Harzen auf Alkylphenolbasis.

12. Luftreifen nach einem der Ansprüche 1 bis 11, wobei die Kautschukzusammensetzung 40 Masseteile oder weniger Siliciumdioxid in Bezug auf 100 Masseteilen der Kautschukkomponente enthält.

13. Luftreifen nach Anspruch 12, wobei das Siliciumdioxid eine spezifische BET-Oberfläche, gemessen nach ASTM D3037-93, von 180 m2/g oder mehr und 300 m2/g oder weniger hat.

14. Luftreifen nach Anspruch 12 oder Anspruch 13, wobei mehr als 3 Masseteile und weniger als 15 Masseteile eines Silankupplungsmittels in Bezug auf 100 Masseteile des Siliciumdioxids enthalten sind.

15. Luftreifen nach einem der Ansprüche 1 bis 14, der ein Seitenverhältnis von 40 % oder mehr aufweist, das wie in der Beschreibung definiert bestimmt wird.

16. Luftreifen nach einem der Ansprüche 1 bis 15, wobei der Außendurchmesser Dt kleiner als 685 (mm) ist.

17. Luftreifen nach einem der Ansprüche 1 bis 16, wobei die Querschnittsbreite Wt(mm) kleiner als 305 mm ist.

18. Luftreifen nach einem der Ansprüche 1 bis 17, wobei (Dt-2×Ht) 430 (mm) oder mehr ist, wobei der Außendurchmesser des Reifens, der wie in der Beschreibung definiert bestimmt wird, Dt (mm) ist, und die Querschnittshöhe des Reifens, die wie in der Beschreibung definiert bestimmt wird, Ht (mm) ist, wenn der Reifen auf einer genormten Felge montiert ist und der Innendruck 250 kPa ist.

19. Luftreifen nach einem der Ansprüche 1 bis 18, wobei, wenn die Querschnittsbreite des Reifens Wt (mm), der Außendurchmesser Dt (mm) und die Querschnittshöhe Ht (mm) ist, wenn der Reifen auf einer genormten Felge montiert ist und der Innendruck 250 kPa ist, das virtuelle Volumen V (mm3) des Reifens, der vom Reifen eingenommene Raum, und Wt, das wie in der Beschreibung definiert bestimmt wird, die folgende Formel erfüllen.

$$[(V + 1{,}5\times10^7) / Wt] \leqq 4{,}02 \times 10^5$$

**20.** Luftreifen nach Anspruch 19, wobei die folgende Formel erfüllt ist.

$$[(V + 2{,}0\times10^7) / Wt] \leqq 4{,}02 \times 10^5$$

**21.** Luftreifen nach Anspruch 20, wobei die folgende Formel erfüllt ist.

$$[(V + 2{,}5\times10^7) / Wt] \leqq 4{,}02 \times 10^5$$

**22.** Luftreifen nach einem der Ansprüche 1 bis 21, der ein Luftreifen für einen Personenkraftwagen ist.

**Revendications**

**1.** Pneumatique, dans lequel

la bande de roulement est formée d'une composition de caoutchouc contenant du caoutchouc styrène-butadiène et du caoutchouc à base d'isoprène comme composants de caoutchouc et un composant de résine,
la teneur Q (parties en masse) du composant de résine est supérieure à 30 parties en masse par rapport à 100 parties en masse du composant de caoutchouc, et
(formule 1) et (formule 2) suivantes sont satisfaites :

$$1600 \leqq (Dt^2 \times \pi/4)/Wt \leqq 2827{,}4 \cdots\cdot \text{(formule 1)}$$

$$Q/Wt > 0{,}1 \cdots\cdots\cdots\cdots \text{(formule 2)},$$

dans lesquelles la teneur en composant de résine par rapport à 100 parties en masse du composant de caoutchouc est Q (parties en masse), et la largeur de section transversale du pneu est Wt (mm) et le diamètre extérieur du pneu est Dt (mm) lorsque le pneu est monté sur une jante standardisée et que la pression interne est de 250 kPa.

**2.** Pneumatique selon la revendication 1, dans lequel, lorsque la quantité de caoutchouc styrène-butadiène est R1 (parties en masse) et la quantité de caoutchouc à base d'isoprène est R2 (parties en masse), dans 100 parties en masse du composant de caoutchouc, (formule 3) et (formule 4) suivantes sont satisfaites.

$$R1+R2 \geqq 60 \cdots\cdots\cdot \text{(formule 3)}$$

$$50 < R1 \leqq 80 \cdots\cdots\cdot \text{(formule 4)}$$

**3.** Pneumatique selon la revendication 1 ou la revendication 2, dans lequel la formule suivante est satisfaite.

$$1865 \leqq (Dt^2 \times \pi/4)/Wt$$

**4.** Pneumatique selon l'une quelconque des revendications 1 à 3, dans lequel la (formule 5) suivante est satisfaite.

$$Q/Wt > 0{,}15 \cdots\cdots\cdot \text{(formule 5)}$$

**5.** Pneumatique selon l'une quelconque des revendications 1 à 4, dans lequel la (formule 5) suivante est satisfaite.

$$Q/Wt < 0{,}35 \cdots\cdots\cdot \text{(formule 6)}$$

**6.** Pneumatique selon l'une quelconque des revendications 1 à 5, dans lequel le caoutchouc styrène-butadiène a un poids moléculaire moyen en poids de 100 000 ou plus ou de 2 000 000 ou moins.

**7.** Pneumatique selon l'une quelconque des revendications 1 à 6, dans lequel le caoutchouc styrène-butadiène est un caoutchouc styrène-butadiène modifié et polymérisé en solution.

**8.** Pneumatique selon l'une quelconque des revendications 1 à 7, dans lequel la teneur en styrène dans le caoutchouc styrène-butadiène est de 5 % en masse ou plus et de 25 % en masse ou moins.

**9.** Pneumatique selon l'une quelconque des revendications 1 à 8, dans lequel la teneur en styrène dans la composition de caoutchouc est de 1 % en masse ou plus et de 5 % en masse ou moins.

**10.** Pneumatique selon l'une quelconque des revendications 1 à 9, dans lequel la composition de caoutchouc contient en outre 40 parties en masse ou moins de caoutchouc butadiène dans 100 parties en masse du composant de caoutchouc.

**11.** Pneumatique selon l'une quelconque des revendications 1 à 10, dans lequel le composant de résine est choisi dans le groupe constitué des résines à base de C5, des résines à base de C5-C9, des résines à base de C9, des résines à base de terpène, des résines à base de composé terpénique aromatique, des résines à base de colophane, des résines de dicyclopentadiène et des résines à base d'alkylphénol.

**12.** Pneumatique selon l'une quelconque des revendications 1 à 11, dans lequel la composition de caoutchouc contient 40 parties en masse ou plus de silice par rapport à 100 parties en masse du composant de caoutchouc.

**13.** Pneumatique selon la revendication 12, dans lequel la silice a une surface spécifique BET, mesurée selon la norme ASTM D3037-93, de 180 m2/g ou plus et de 300 m2/g ou moins.

**14.** Pneumatique selon la revendication 12 ou la revendication 13, dans lequel plus de 3 parties en masse et moins de 15 parties en masse d'un agent de couplage silane sont contenues par rapport à 100 parties en masse de la silice.

**15.** Pneumatique selon l'une quelconque des revendications 1 à 14, qui a un rapport d'aspect, déterminé comme défini dans la description, de 40 % ou plus.

**16.** Pneumatique selon l'une quelconque des revendications 1 à 15, dans lequel le diamètre extérieur Dt est inférieur à 685 (mm).

**17.** Pneumatique selon l'une quelconque des revendications 1 à 16, dans lequel la largeur de section transversale Wt(mm) est inférieure à 305 mm.

**18.** Pneumatique selon l'une quelconque des revendications 1 à 17, dans lequel (Dt-2×Ht) est de 430 (mm) ou plus, le diamètre extérieur du pneu étant Dt (mm), déterminé comme défini dans la description, et la hauteur de section transversale du pneu étant Ht (mm), déterminée comme définie dans la description, lorsque le pneu est monté sur une jante standardisée et que la pression interne est de 250 kPa.

**19.** Pneumatique selon l'une quelconque des revendications 1 à 18, dans lequel, lorsque la largeur de section transversale du pneu est Wt (mm), le diamètre extérieur est Dt (mm), et la hauteur de section transversale est Ht (mm), lorsque le pneu est monté sur une jante standardisée et que la pression interne est de 250 kPa, le volume virtuel V (mm3) du pneu, l'espace occupé par le pneu, et Wt, déterminés comme défini dans la description, satisfont à la formule suivante.

$$[(V + 1{,}5\times10^7) / Wt] \leqq 4{,}02 \times 10^5$$

**20.** Pneumatique selon la revendication 19, dans lequel la formule suivante est satisfaite.

$$[(V + 2{,}0\times10^7) / Wt] \leqq 4{,}02 \times 10^5$$

**21.** Pneumatique selon la revendication 20, dans lequel la formule suivante est satisfaite.

$$[(V + 2,5\times10^{7}) / Wt] \leqq 4,02 \times 10^{5}$$

**22.** Pneumatique selon l'une quelconque des revendications 1 à 21, qui est un pneumatique pour une voiture particulière.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014213836 A
- JP 2017052329 A
- JP 2018154181 A
- JP 2019085445 A
- JP 2010111753 A
- US 4414370 B
- JP 59006207 A
- JP 5058805 B
- JP 1313522 A
- US 5010166 B

### Non-patent literature cited in the description

- *Toa Synthetic Research Annual Report TREND2000*, vol. 3, 42-45